# EUROPÄISCHE PATENTSCHRIFT

(11) **EP 2 063 168 B1**
(45) Veröffentlichungstag und Bekanntmachung des Hinweises auf die Patenterteilung: **14.06.2017**
(21) Anmeldenummer: 07022541.2
(22) Anmeldetag: 21.11.2007
(51) Int. Cl.: F21K 9/00, F21K 9/61, G02B 6/00, F21S 4/00

(54) **LED-Lichtsystem**
LED light system
Système lumineux DEL

(43) Veröffentlichungstag der Anmeldung: 27.05.2009
(73) Patentinhaber: MENTOR GmbH & Co. Präzisions-Bauteile KG, D-40699 Erkrath (DE)
(72) Erfinder: Kroening, Gerald, 42781 Haan (DE)
(74) Vertreter: Sparing Röhl Henseler

(56) Entgegenhaltungen:
- EP-A- 1 830 178
- WO-A-2006/122392
- WO-A-2007/016939
- US-A1- 2007 241 653
- US-B1- 6 550 952
- US-B1- 6 577 794

## Beschreibung

Die Erfindung betrifft ein LED-Lichtsystem mit LED bestückten Gehäusen.

Es sind modulare LED-Lichtsysteme für die vielfältigsten Verwendungszwecke entwickelt worden. Ein solches LED-Lichtsystem besteht aus einem Baukastensystem mit den Einzelelementen Lichtleiter, einem mit LED bestückten Gehäuse und gegebenenfalls einem zweiten bestückten Gehäuse für die doppelseitige Lichteinstrahlung oder einem Leergehäuse zwecks alleiniger Befestigung auf dieser Seite. Die Funktion dieses Lichtleiterelements besteht in dem gezielt quer zur Längsrichtung abstrahlenden Licht, welches mittels einer aufgedruckten oder gelaserten Reflektorfläche erreicht wird. Um vielfältige Einsatzfälle zu ermöglichen, werden Lichtleiter beispielsweise mit Durchmessern im Bereich zwischen 5 und 10 mm sowie Längen im Bereich zwischen 100 und 300 mm eingesetzt. Auch deutlich größere Längen bis zu mehreren Metern sind möglich und bieten somit ein weites Betätigungsfeld in der Architektur, bei Kantenausleuchtungen, als Gefahrenhinweis, in der direkten Aus- bzw. Beleuchtung und auch als helle Signalquelle. Die Farben sind wählbar, wobei Duo-LEDs und RGB(Rot/Grün/Blau)-Varianten möglich sind. Der Lichtleiterstab selbst bleibt auch bei hellem Licht kalt. Das Thermomanagement des LED-Gehäuses sorgt für eine Wärmeabführung.

Die Strahlung erfolgt bei den LEDs durch die aufgenommene elektrische Leistung. Die Lichtausbeute steigt dabei praktisch linear mit dem Durchlassstrom. Der maximal zulässige Dauerstrom liegt bei den bisher verwendeten LEDs üblicherweise zwischen 50 und 100 mA. Bekannt sind ferner Leistungs-LEDs, die für einen Durchlassstrom, beispielsweise größer 1 A, ausgelegt sind und damit eine deutlich höhere Lichtausbeute besitzen. Nachteilig dabei ist, dass das Thermomanagement des LED-Gehäuses nicht ausreicht, dauerhaft eine einwandfreie Funktion des Lichtsystems sicherzustellen.

Aus EP 1 830 178 A2 ist eine Vorrichtung zur Emission von linienartigem Licht bekannt, die ein oder mehrere optische Bauteile aufweist, die in einer Trägerstruktur angeordnet sind. Diese Trägerstruktur umfasst ein Strangprofil, in dem die Einrichtungen zur Abstrahlung von Licht und das optische Bauteil bzw. die optischen Bauteile angeordnet sind.

Aus US 2007/0241653 A1 ist bekannt, die LED-Lichteinkopplung stirnseitig eines Lichtleiters vorzunehmen.

Aufgabe der Erfindung ist es daher, ein LED-Lichtsystem mit einem verbesserten

Thermomanagement der LED-Gehäuse zu schaffen.

Diese Aufgabe wird durch die Merkmale des Anspruchs 1 geschaffen.

Hierdurch wird ein LED-Lichtsystem geschaffen, deren Gehäuse mit einem Kühlkörper kombiniert sind, die von einem Sockelprofil gebildet sind. Der Kühlkörper kann dabei mehrfach funktional genutzt werden. Das Sockelprofil ist thermisch sehr gut leitend und besteht vorzugsweise aus Metall, insbesondere Aluminium. Die vom Durchlassstrom erzeugte Joulesche Wärme wird durch den Kühlkörper und dessen Kühlfläche abgeführt und damit das Thermomanagement des LED-Gehäuses deutlich verbessert.

Dabei kann der Kühlkörper gleichzeitig auch als optischer Reflektor für den Lichtleiter ausgestaltet sein. Als Sockelprofil kann der Kühlkörper ferner zusätzliche Bauelemente wie beispielsweise eine elektrische Ansteuerung für die LED aufnehmen, die wiederum durch das Sockelprofil gekühlt werden kann.

Das Sockelprofil braucht keine durchgehende Struktur zu besitzen, sondern kann auch als Einzelteil nur dem Gehäuse zugeordnet sein und dort eine individuelle Länge bezogen auf Thermik, Ansteuerung und Befestigung erhalten.

Die Modularität des Lichtsystems bleibt erhalten und wird erweitert durch die Kühlfunktion des Sockelprofils und gegebenenfalls weiter erweitert durch optische Möglichkeiten. Der von einem Sockelprofil gebildete Reflektor ermöglicht individuelle Einstellungen von Reflektorflächen. Die Abstrahlwinkel sind damit veränderbar, anders als bei bedruckten Lichtleitern.

Das Sockelprofil erlaubt ferner die Befestigung von Einzelteilen, vorzugsweise mittels Halteclipsen.

Ergänzt wird das LED-System gegebenenfalls durch eine Verteilerbox, an der mehrere Lichtsysteme als Untergruppen mittels Stecker angeschlossen werden können.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine perspektivische Seitenansicht eines LED-Lichtsystems gemäß einem ersten Ausführungsbeispiel,
Fig. 2 zeigt schematisch eine Stirnsicht des LED-Lichtsystems gemäß Fig. 1,
Fig. 3 zeigt schematisch eine perspektivische Seitenansicht des LED-Lichtsystems gemäß Fig. 1 mit abgenommenem Gehäuse,
Fig. 4 zeigt schematisch eine perspektivische Seitenansicht eines LED-Lichtsystems gemäß einem zweiten Ausführungsbeispiel,
Fig. 5 zeigt schematisch eine perspektivische Seitenansicht eines LED-Lichtsystems gemäß einem dritten Ausführungsbeispiel,
Fig. 6 zeigt schematisch eine perspektivische Seitenansicht des LED-Lichtsystems gemäß Fig. 5,
Fig. 7 zeigt schematisch eine perspektivische Seitenansicht eines LED-Lichtsystems gemäß einem vierten Ausführungsbeispiel,
Fig. 8 zeigt schematisch eine Verteilerbox mit mehreren LED-Lichtsystemen.

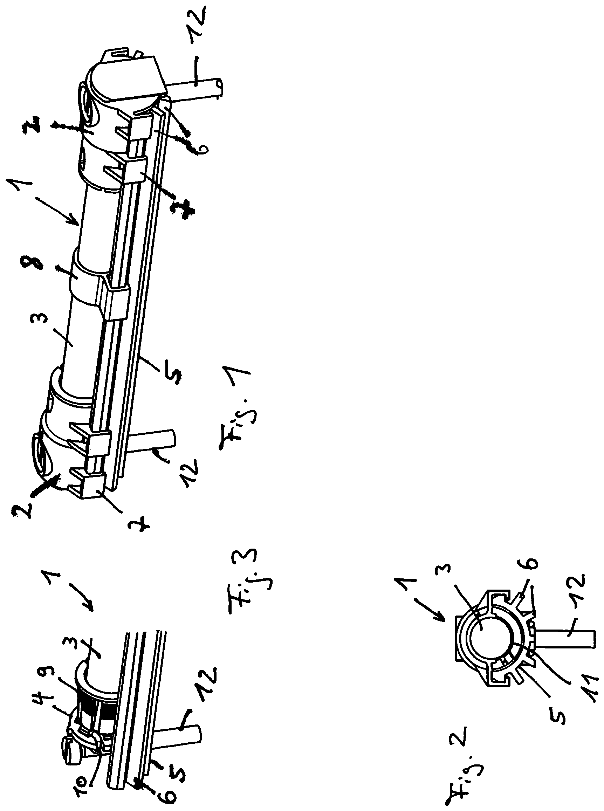

Die Fig. 1 bis 3 zeigen ein LED-Lichtsystem 1 gemäß einem ersten Ausführungsbeispiel mit einem LED bestückten Gehäuse 2 und einem ankoppelbaren Lichtleiter 3 zum Abstrahlen von von der LED erzeugtem Licht. Die LED ist auf einer an eine Stromversorgung mittels Litzen 10 anschließbaren Platine 4 angeordnet. Das Gehäuse 2 weist ein Sockelprofil 5 auf, das als Kühlkörper ausgebildet und mit der Platine 4 in wärmeleitender Verbindung steht. Vorzugsweise ist die Platine 4 entlang eines Umfangsabschnitts thermisch gekoppelt an den Kühlkörper 5. Ein Mittel dazu ist die Verwendung von Wärmeleitpaste bzw. Wärmeleitkleber. Die verwendeten LEDs sind vorzugsweise solche für Dauerstrombelastung größer 500 mA, wodurch eine hohe Leuchtkraft erreicht wird. Da durch das Sockelprofil 5 eine Wärmeabführung gewährleistet ist, ist eine einwandfreie Funktion aller Eigenschaften der LED sichergestellt. Die LED kann Licht wählbarer Farbe erzeugen. Duo-LEDs sind einsetzbar ebenso wie RGB-LEDs.

Das LED-Lichtsystem 1 besitzt ein Sockelprofil 5, das vorzugsweise als Strangprofil ausgebildet ist. Als Material ist bevorzugt ein Metall, insbesondere Aluminium. Das Sockelprofil ist mit Rippen 6 ausgebildet, die einerseits Kühlrippen bilden und andererseits als Halterippen zum Aufstecken von Befestigungsclipsen 7 für das Gehäuse 2 und/oder Unterstützungsklammern 8 ausgebildet sind.

Der Lichtleiter 3 ist vorzugsweise über eine Spannhülse 9 in das Gehäuse 2 einsetzbar, wie dies die Fig. 3 zeigt. Die Spannhülse 9 bildet einen Adapter für das Einsetzen von Lichtleitern 3 unterschiedlicher Durchmesser in das Gehäuse 2. Die Durchmesser der Lichtleiter 3 variieren vorzugsweise zwischen 5 und 10 mm.

Der Lichtleiter 3 ist für eine Abstrahlung von Licht quer zu seiner Längsrichtung stabförmig ausgebildet. Die Länge des Lichtleiters 3 kann von wenigen Millimetern bis hin zu mehreren Metern reichen.

Bei dem in den Fig. 1 bis 3 dargestellten ersten Ausführungsbeispiel erstreckt sich das Sockelprofil 5 in einem Bereich längs des Lichtleiters 3 und bildet dort gegebenenfalls einen optischen Reflektor 11. Das Sockelprofil besitzt dazu längs einer Erstreckung des Lichtleiters 3 zwischen zwei randseitigen Gehäusen 2 eine vorzugsweise polierte Metallfläche als optischen Reflektor 11. Der Lichtleiter 3 ist dann vorzugsweise an seinen beiden Enden an ein mit einer LED bestücktes Gehäuse 2 gekoppelt und das Sockelprofil 5 bildet ein Brückenelement mit optischer Reflektorausbildung 11 für den Lichtleiter 3 zwischen den Gehäusen 2. Der Lichtleiter 3 wird bei beidseitig endseitig angeordneten und mit LEDs bestückten Gehäusen 2 von beiden Enden her bestrahlt. Das Sockelprofil 5 kann im Bereich der Bildung des optischen Reflektors 11 wählbar positionierbar sein. Ferner ist die Breite des Reflektors 11 wählbar. Das Sockelprofil 5 ist rinnenförmig ausgebildet. Der optische Reflektor 11 des Sockelprofils 5 bildet dann eine gebogene Reflektorfläche, die das von der LED erzeugte Licht quer zur Längsrichtung des Lichtleiters 3 abstrahlt und dabei einen gezielten Lichtaustritt erlaubt.

Das Lichtsystem 1 kann mittels Befestigungsschrauben 12 montiert werden.

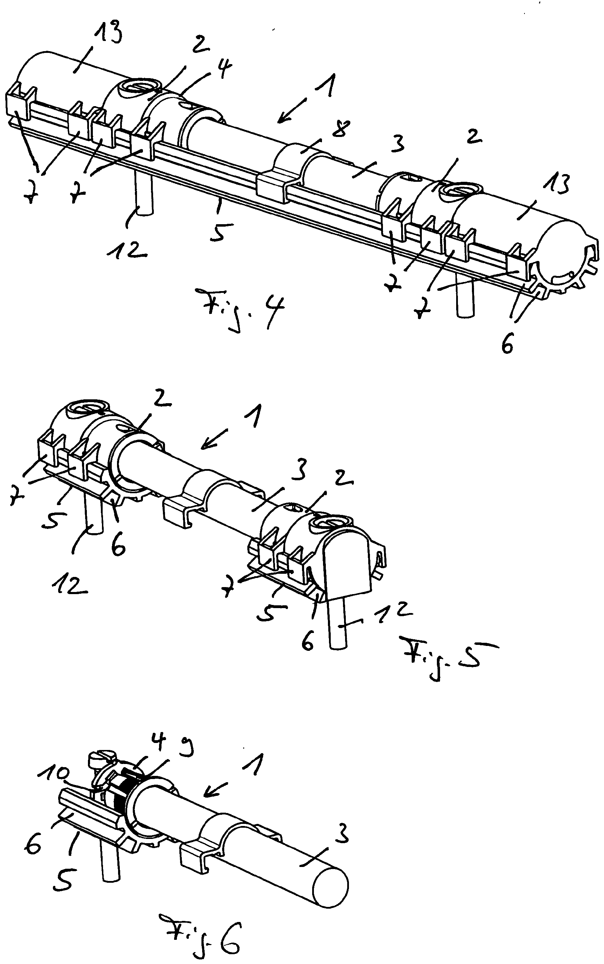

Die Fig. 4 zeigt ein zweites Ausführungsbeispiel des LED-Lichtsystems 1, das sich von dem zuvor beschriebenen ersten Ausführungsbeispiel eines LED-Lichtsystems 1 dadurch unterscheidet, dass das Sockelprofil 5 neben dem Gehäuse 2 zusätzlich eine elektrische Ansteuerung 13 aufnimmt und mittels Befestigungsclips 7 an diesem gehalten wird. Die Ansteuerung 13 erzeugt Wärme, die durch eine Thermokopplung an das Sockelprofil 5 ableitbar ist. Die Ansteuerung 13 wird insbesondere dann benötigt, wenn Farbvariationen gesteuert werden sollen oder durch höhere Ströme erzeugte Wärme thermisch abgeleitet oder entschärft werden soll.

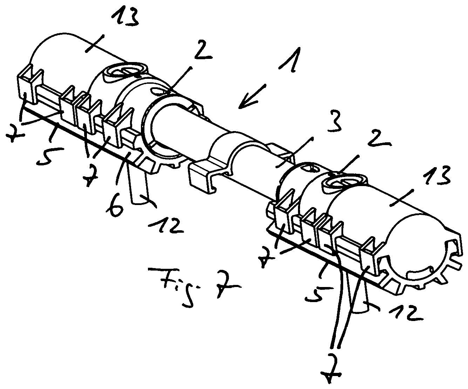

Wie die Fig. 5 bis 7 zeigen, muss das Sockelprofil 5 jedoch keine durchgehende Struktur besitzen, sondern kann auch als Einzelteil nur den Gehäusen 2 zugeordnet sein und dort eine individuelle Länge bezogen auf Thermik, Ansteuerung 13 (Fig. 7) und Befestigung erhalten.

Die Montage des LED-Lichtsystems 1 erfolgt vorzugsweise von vorne, so dass die Montage sehr einfach und zuverlässig ist. Hier bildet das Sockelprofil 5 eine Unterseite des LED-Lichtsystems 1, das erlaubt, dass Kabelführungen verlegt werden. Ein einfacher Anschluss des Gesamtsystems über eine Leitungsversorgung ist möglich.

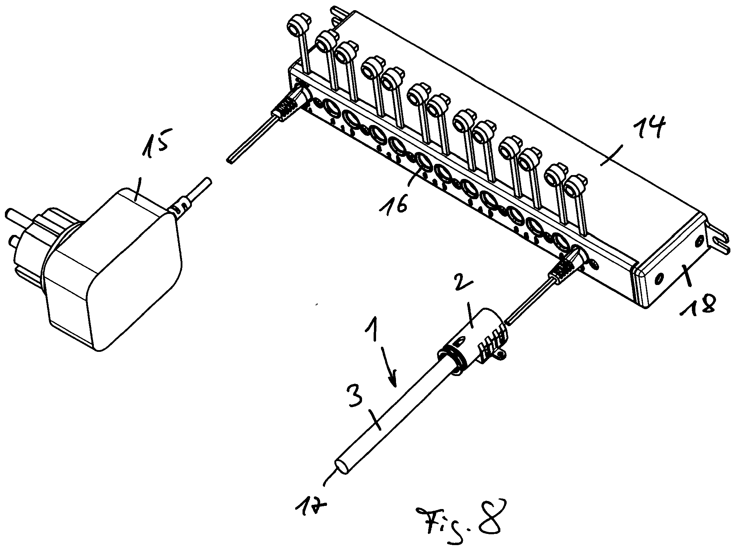

Fig. 8 zeigt ein weiteres Ausführungsbeispiel, bei dem eine Verteilerbox 14 vorgesehen ist, an die mehrere LED-Lichtsysteme 1 mittels jeweils eines mit Litze und Stecker ausgebildeten Gehäuses 2 angeschlossen sind. Das LED-Lichtsystem 1 ist dabei beidseitig mit LEDs bestückten Gehäusen versehen.

Die Verteilerbox 14 beinhaltet eine Spannungsversorgung 15 für das Netz sowie weitere Steckplätze 16, die für weitere Gehäuse 2 mit passender Litze und Stecker zum Anschluß zur Verfügung stehen. Darüber hinaus gibt es einen Erweiterungssteckplatz 18, der bei Austausch zusätzliche Funktionen zur Verfügung stellen kann, wie z.B. Dimmverhalten, separate Ein- und Ausschaltung, Funksteuerung, Farbsteuerung, Zeitschaltuhrgestaltung, usw.

Das vorstehend beschriebene LED-Lichtsystem bildet ein Beleuchtungselement für vielfältige Einsatzzwecke, z. B. in der Innen- und Außenarchitektur, in der Möbelindustrie, im Sanitärbereich, im Automobil, dort insbesondere mit Signal erzeugender Funktion, wie z.B. als Bremsleuchte, bei elektrischen Geräten usw.

Der Lichtleiter 3 kann einen optischen Reflektor aufweisen, der insbesondere aufgedruckt oder gelasert ist.. Alternativ oder zusätzlich kann der Kühlkörper als optischer Reflektor für diesen Lichtleiter 3 dienen.

## Patentansprüche

1. LED-Lichtsystem mit LED bestückten Gehäusen (2) und einem ankoppelbaren stabförmigen Lichtleiter (3) zum Abstrahlen von von den LEDs erzeugtem Licht quer zu seiner Längsrichtung, und die LEDs jeweils auf einer an eine Stromversorgung anschließbaren Platine (4) angeordnet sind, wobei jedes Gehäuse (2) ein Sockelprofil (5) aufweist, das als Kühlkörper ausgebildet ist und mit der jeweiligen Platine (4) in wärmeleitender Verbindung steht, wobei der Lichtleiter (3) mit den beidseitig endseitig angeordneten, LED bestückten Gehäusen (2) von beiden Enden her bestrahlt ist und jedes Sockelprofil (5) rinnenförmig mit Rippen (6) ausgebildet ist, die einerseits Kühlrippen bilden und andererseits Halterippen zum Aufstecken von Befestigungsclipsen (7).

2. LED-Lichtsystem nach Anspruch 1, **dadurch gekennzeichnet, dass** jedes Sockelprofil (5) als Strangprofil ausgebildet ist.

3. LED-Lichtsystem nach Anspruch 1 oder 2, **dadurch gekennzeichnet, dass** der Lichtleiter (3) über eine Spannhülse (9) in ein Gehäuse (2) einsetzbar ist.

4. LED-Lichtsystem nach Anspruch 3, **dadurch gekennzeichnet, dass** ein Sockelprofil (5) sich in einen Bereich längs des Lichtleiters (3) erstreckt und dort einen optischen Reflektor (11) bildet.

5. LED-Lichtsystem nach einem der Ansprüche 1 bis 4, **dadurch gekennzeichnet, dass** die LED Licht wählbarer Farbe erzeugt.

6. LED-Lichtsystem nach einem der Ansprüche 1 bis 5, **dadurch gekennzeichnet, dass** zumindest ein Sockelprofil neben dem Gehäuse (2) zusätzlich eine elektrische Ansteuerung (13) aufnimmt.

7. LED-Lichtsystem nach einem der Ansprüche 1 bis 6, **dadurch gekennzeichnet, dass** mehrere desselben an eine Verteilerbox (14) angeschlossen sind.

## Claims

1. LED light system comprising housings (2) which are fitted with LEDs, and comprising a couplable rod-like light guide (3) for radiating light which is generated by the LEDs transverse to the longitudinal direction of the said light guide, and the LEDs are each arranged on a circuit board (4) which can be connected to a power supply, wherein each housing (2) has a base profile (5) which is in the form of a heat sink and is thermally conductively connected to the respective circuit board (4), wherein the light guide (3) with the housings (2) which are arranged at the end on both sides and are fitted with LEDs is irradiated from both ends and each base profile (5) is formed with ribs (6) in a channel-like manner, the said ribs firstly forming cooling ribs and secondly forming retaining ribs for attaching fastening clips (7).

2. LED light system according to Claim 1, **characterized in that** each base profile (5) is in the form of an extruded profile.

3. LED light system according to Claim 1 or 2, **characterized in that** the light guide (3) can be inserted into a housing (2) by means of a clamping sleeve (9).

4. LED light system according to Claim 3, **characterized in that** a base profile (5) extends along the light guide (3) in one region and forms an optical reflector (11) there.

5. LED light system according to one of Claims 1 to 4, **characterized in that** the LED generates light of a selectable colour.

6. LED light system according to one of Claims 1 to 5, **characterized in that** at least one base profile additionally accommodates an electrical actuation system (13), in addition to the housing (2).

7. LED light system according to one of Claims 1 to 6, **characterized in that** a plurality of the same are connected to a distribution box (14).

## Revendications

1. Système lumineux DEL avec des boîtiers (2) équipés de DEL et un guide de lumière (3) en forme de barre et pouvant être accouplé pour le rayonnement de la lumière produite par les DEL transversalement à sa direction longitudinale, et les DEL sont disposées respectivement sur une platine (4) raccordable à une alimentation électrique, dans lequel chaque boîtier (2) présente un profilé-socle (5) qui est réalisé en tant que corps de refroidissement et est en liaison thermoconductrice avec la platine (4) respective, dans lequel le guide de lumière (3) avec les boîtiers (2), équipés de DEL, disposés des deux côtés à chaque extrémité, est éclairé depuis les deux extrémités et chaque profilé-socle (5) est réalisé avec une forme de goulotte avec des nervures (6) qui forment d'un côté des nervures de refroidissement et, d'un autre côté, des nervures de retenue pour insérer des clips de fixation (7).

2. Système lumineux DEL selon la revendication 1, **caractérisé en ce que** chaque profilé-socle (5) est réalisé en tant que profilé extrudé.

3. Système lumineux DEL selon la revendication 1 ou 2, **caractérisé en ce que** le guide de lumière (3) peut être installé dans un boîtier (2) par le biais d'un manchon de serrage (9).

4. Système lumineux DEL selon la revendication 3, **caractérisé en ce qu'**un profilé-socle (5) s'étend dans une zone le long du guide de lumière (3) et forme là un réflecteur optique (11).

5. Système lumineux DEL selon l'une quelconque des revendications 1 à 4, **caractérisé en ce que** les DEL produisent une lumière d'une couleur sélectionnable.

6. Système lumineux DEL selon l'une quelconque des revendications 1 à 5, **caractérisé en ce qu'**au moins un profilé-socle reçoit à côté du boîtier (2) en plus une commande électrique (13).

7. Système lumineux DEL selon l'une quelconque des revendications 1 à 6, **caractérisé en ce que** plusieurs de celui-ci sont raccordés à une boîte de distribution (14).
